# EUROPEAN PATENT APPLICATION

(11) **EP 4 787 563 A1**
(43) Date of publication of application: **05.08.2026**
(21) Application number: 24870246.6
(22) Date of filing: 23.08.2024
(51) Int. Cl.: H01M 50/15, H01M 50/169, H01M 50/317, H01M 50/593, H01M 50/586

(54) **END COVER ASSEMBLY, BATTERY, BATTERY PACK, AND ELECTRIC SYSTEM**

(30) Priority: 25.09.2023 CN 202322628833 U
(71) Applicant: BYD Company Limited, Shenzhen, Guangdong 518118 (CN)
(72) Inventor: ZHU, Yan, Shenzhen, Guangdong 518118 (CN); LIU, Xufeng, Shenzhen, Guangdong 518118 (CN); CHEN, Jinfu, Shenzhen, Guangdong 518118 (CN); LI, Xingqun, Shenzhen, Guangdong 518118 (CN); ZHOU, Huan, Shenzhen, Guangdong 518118 (CN)
(74) Representative: Taor, Simon Edward William
(86) International application number: PCT/CN2024/114194
(87) International publication number: WO 2025/066700

(57) **Abstract**

An end cover assembly (10), a battery (100), a battery pack (200), and an electric system (300). The end cover assembly (10) comprises a cover plate (11), an explosion-proof valve (12), and an insulating plate group (13). The cover plate **(11)** comprises a first surface **(111)** and a second surface (112) facing away from each other in the thickness direction of the cover plate (11), and the cover plate (11) is provided with an explosion-proof hole (113) running through the first surface (111) and the second surface (112); the explosion-proof valve (12) is connected to the cover plate (11) and blocks the explosion-proof hole (113), and the explosion-proof valve (12) is provided with an opening region (121); the insulating plate group (13) comprises a third surface (131) and a fourth surface (132) facing away from each other in the thickness direction of the insulating plate group (13), the third surface (131) is connected to the second surface (112), the insulating plate group (13) is provided with a gap (135), at least part of the orthographic projection of the explosion-proof valve (12) on the insulating plate group (13) overlaps the gap (135), and the area S_{G1} of the gap (135) and the area S_{F1} of the opening region (121) satisfy the relational expression: 0.03≤S_{G1/}S_{F1}≤0.15.

## Description

### CROSS-REFERENCE TO RELATED APPLICATIONS

The present disclosure claims priority to Chinese Patent Present disclosure No. 202322628833.X filed on September 25, 2023, which is incorporated herein by reference in its entirety.

### FIELD

The present disclosure relates to the field of energy storage equipment, and in particular, to an end cover assembly, a battery, a battery pack and an electric system.

### BACKGROUND

As technology evolves, use of batteries is increasing in popularity. The common battery at present mainly includes housing, a cell assembly, and an end cover assembly. The cell assembly is accommodated in the shell, the end cover assembly seals the housing, and the tab of the cell assembly is connected with the pole post on the end cover assembly. In order to ensure the safety of the battery, an explosion-proof valve is generally assembled on the end cover assembly, which can explode and deflate in the event of gas expansion inside the battery.

However, existing end cap assemblies have a slow response of the explosion-proof valve. When the gas is rapidly generated in the battery, the response speed of the explosion-proof valve determines the safety capability of the battery. Moreover, the combustion residue in the battery is prone to be ejected after the existing explosion-proof valve bursts open, causing secondary damage. Therefore, how to solve the problems of slow response speed of the explosion-proof valve and ejection of the combustion residue in the battery becomes critical.

### SUMMARY

The present disclosure provides an end cover assembly, a battery, a battery pack and an electric system, aiming to solve the problems of slow response speed of the explosion-proof valve and ejection of the combustion residue.

In order to solve the technical problems, the present disclosure provides the following technical solutions.

In a first aspect, the present disclosure provides an end cover assembly. An end cover assembly, includes a cover plate, an explosion-proof valve, and an insulating plate group; a cover plate comprises a first surface and a second surface facing away from each other in a thickness direction of the cover plate, and the cover plate is arranged an explosion-proof hole running through the first surface and the second surface; an explosion-proof valve is connected to the cover plate and block the explosion-proof hole, and the explosion-proof hole is arranged an opening region; and an insulating plate group includes a third surface and a fourth surface facing away from each other in the thickness direction of the insulating plate group, the third surface is connected to the second surface, the insulating plate group is arranged a gap, at least part of an orthographic projection of the explosion-proof valve on the insulating plate group overlapping the gap, and an area S_{G1} of the gap and an area S_{F1} of the opening region satisfying a relationship expression: 0.03≤S_{G1}/S_{F1}≤0.15.

In some embodiments, the insulating plate group includes a first insulating plate and a second insulating plate disposed opposite to each other in a length direction of the cover plate, and the gap is between the first insulating plate and the second insulating plate.

In some embodiments, a width of the gap is in a range of 0.5mm to 3mm.

In some embodiments, the insulating plate group is arranged an accommodation groove, an opening of the accommodation groove is away from the fourth surface of the insulating plate group, and a projection of the explosion-proof valve on the insulating plate group is located in the accommodation groove.

In some embodiments, the accommodation groove and the explosion-proof valve satisfy a relationship expression: 0.3≤F1/G1≤1, wherein F1 is an area of a projection of the explosion-proof valve on the insulating plate group, and G1 is an area of a projection of the accommodation groove on the cover plate.

In some embodiments, the explosion-proof valve has two opposite straight edges and two opposite arc edges, the two ends of the straight edges are connected to the two arc edges respectively, and the accommodation groove has a square structure.

In some embodiments, the accommodation groove and the insulating plate group satisfy a relationship expression: 0.4≤c/h≤0.8, wherein c is a width of the accommodation groove in a width direction of the cover plate, and h is a width of the insulating plate group.

In some embodiments, the insulating plate group includes the first insulating plate and the second insulating plate arranged opposite to each other in the length direction of the cover plate, and the accommodation groove includes a first accommodation groove and a second accommodation groove; wherein the first insulating plate is arranged the first accommodation groove concaved on a side facing the cover plate, and the second insulating plate is arranged the second accommodation groove concaved on a side facing the cover plate.

In some embodiments, the accommodation groove satisfies at least one of the following: a groove depth H1 of the first accommodation groove is in a range of 0.5mm to 2mm; or a groove depth H2 of the second accommodation groove is in a range of 0.5mm to 2mm.

In some embodiments, the first accommodation groove extends to a side of the first insulating plate facing the second insulating plate to form a first notch in the length direction of the cover plate, and the second accommodation groove extends to a side of the second insulating plate facing the first insulating plate to form a second notch in the length direction of the cover plate.

In some embodiments, a bottom wall of the accommodation groove is arranged a ventilation hole penetrating to the fourth surface.

In some embodiments, the bottom wall of the accommodation groove is arranged a plurality of the ventilation holes, the plurality of the ventilation holes including a first ventilation holes and second ventilation holes, the first ventilation holes are arranged on the first insulating plate, and the second ventilation holes are arranged on the second insulating plate.

In some embodiments, the plurality of the ventilation holes satisfy at least one of the following: the first ventilation holes on the first insulating plate are arranged in an array; or the second ventilation holes on the second insulating plate are arranged in an array.

In some embodiments, the explosion-proof hole is opposite to the ventilation holes.

In some embodiments, the cover plate is further arranged a first pole hole, a second pole hole, and a first liquid injection hole, one of the first pole hole and the second pole hole is a positive pole hole, the other of the first pole hole and the second pole hole is a negative pole hole, and the first liquid injection hole is located between the positive pole hole and the explosion-proof hole.

In a second aspect, the present disclosure also provides a battery. The battery includes a cell assembly, a housing and the end cover assembly according to any one of claims 1 to 15, the cell assembly is accommodated in the housing, the end cover assembly is connected with the housing, and the end cover assembly is electrically connected with the cell assembly.

In a third aspect, the present disclosure also provides a battery pack. The battery pack includes the battery of the second aspect.

In a fourth aspect, the present disclosure also provides an electric system. The electric system includes the battery pack of the third aspect.

The present disclosure, by providing a gap in the insulating plate group, allows the gas can flow to the vicinity of the explosion-proof valve through the gap when the internal pressure of the battery increases, thereby bursting open the explosion-proof valve; simultaneously, by ensuring that the orthographic projection of the explosion-proof valve on the insulating plate group coincides with the gap, when the internal pressure of the battery increases, the gas flow velocity and flow rate at the gap can more quickly burst open the explosion-proof valve, thereby achieving the effect of rapid response of the explosion-proof valve; moreover, with the area of the gap within the range, on the one hand, it ensures smooth exhaust from inside the battery, and on the other hand, it prevents excessive combustion residues from being ejected from the gap and the explosion-proof hole after the explosion- proof valve bursts, reducing safety hazards.

### BRIEF DESCRIPTION OF THE DRAWINGS

In order to clearly illustrate the embodiments of the present disclosure or the technical solutions in the prior art, the figures required for use in the description of the embodiments or prior art will be briefly described below, and it will be apparent that the figures in the description below are only some embodiments of the present disclosure and that other figures can be obtained from these figures without inventive step for a person of ordinary skill in the art.
FIG. 1 is an exploded schematic view of a structure of a battery according to some embodiments of present disclosure.
FIG. 2 is an exploded schematic view of a structure of an end cover assembly according to some embodiments of the present disclosure.
FIG. 3 is a top view of an insulating plate group according to some embodiments of the present disclosure.
FIG. 4 is a schematic cross-sectional view of the insulating plate group along the direction of A-A in FIG. 3.
FIG. 5 is a top view of the insulating plate group accommodating an explosion-proof valve according to some embodiments of the present disclosure.
FIG. 6 is a top view of the insulating plate group and the explosion-proof valve separated according to some embodiments of the present disclosure.
FIG. 7 is a schematic view of a structure of a battery pack according to some embodiments of the present disclosure.
FIG. 8 is a schematic view of a structure of an electric system according to some embodiments of the present disclosure.

### Explanation of reference numerals:

100-battery, 10-end cover assembly, 20-cell assembly, 30-housing, 21-cell, 22-tab, 22A-positive tab, 22B-negative tab, 11-cover plate, 111- first surface, 112-second surface, 113- explosion-proof hole, 114A-first pole hole, 114B-second pole hole, 115-first liquid injection hole, 12-explosion-proof valve, 121-opening region, 13-insulating plate group, 131-third surface, 132-fourth surface, 133-accommodation groove, 134-ventilation hole, 134A-first ventilation hole, 134B-second ventilation hole, 135-gap, 136-second liquid injection hole, 137-receiving groove, 13A-first insulating plate, 131A-third left surface, 132A-fourth left surface, 13A1-first opposite end, 13A2-first connecting end, 13A3-third pole hole, 13A4-first accommodation groove, 13A5-first notch, 13B-second insulating plate, 131B-third right surface, 132B-fourth right surface, 13B1-second opposite end, 13B2-second connecting end, 13B3-fourth pole hole, 13B4-second accommodation groove, 13B5-second notch, 14-pole, 14A-first pole, 14B-second pole, 200-battery pack, 300-electric system, X-length direction, Y-width direction, Z-thickness direction.

### DETAILED DESCRIPTION

The technical solutions in the embodiments of the present disclosure will be clearly and completely described below in combination with the figures in the embodiments of the present disclosure. Obviously, the described embodiments are only part of the embodiments of the present disclosure, rather than all the embodiments. Based on the embodiments in the present disclosure, all the other embodiments obtained by those skilled in the art without inventive step based on the embodiments of the present disclosure are intended to be within the scope of protection of the present disclosure.

It should be noted that when a component is referred to as being "fixed to" another component, it can be directly on the other component or there may be an intervening component. When a component is considered to be "connected" to another component, it can be directly connected to the other component or intervening components may be present simultaneously.

Unless otherwise defined, all technical and scientific terms used herein have the same meaning as commonly understood by one of ordinary skill in the art to which this present disclosure belongs. The terms used in the specification of the present disclosure are for the purpose of describing specific embodiments only and are not intended to limit the present disclosure. The term "and/or" used herein includes any and all combinations of one or more related listed items. The term "A/B" used herein represents the ratio of parameter A to parameter B.

The following describes some embodiments of the present disclosure in detail with reference to the figures. The embodiments and features in the embodiments can be combined with each other without conflict.

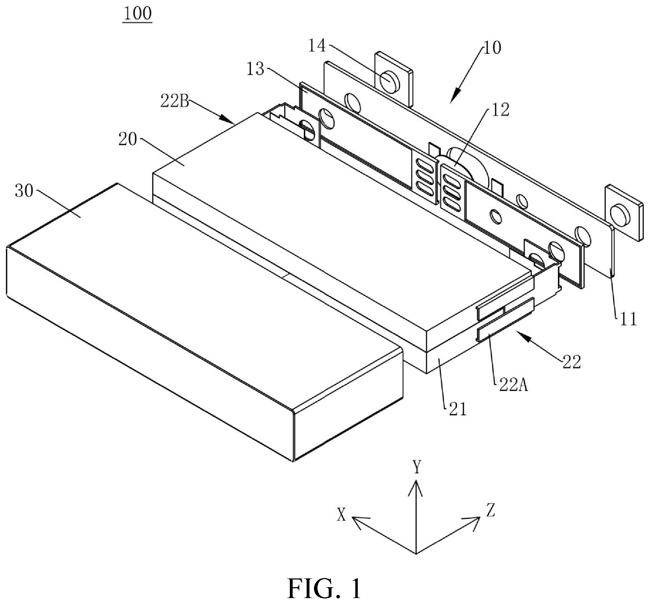

The present disclosure provides a battery 100, as shown in FIG. 1, the battery 100 comprises a housing 30, a cell assembly 20 and an end cover assembly 10. The cell assembly 20 is accommodated in the housing 30. The end cover assembly 10 is connected with the housing 30, the end cover assembly 10 seals an opening of the housing 30, and the end cover assembly 10 is electrically connected with the cell assembly 20.

Exemplarily, the appearance shape of the battery 100 can be a cuboid. In the present disclosure, the length direction of the battery 100 is defined as the X direction of the space coordinate system, the width direction of the battery 100 is defined as the Y direction of the space coordinate system, and the height direction (i.e. the thickness direction) of the battery 100 is defined as the Z direction of the space coordinate system. For the convenience of understanding, the directions are exemplified as follows: the direction in which the cell assembly 20 is put into the housing 30 from the opening is the height direction of the battery 100, the long side of the opening is the length direction, and the short side of the opening is the width direction.

As shown in FIG. 1, the cell assembly 20 comprises cell 21 and tab 22. The cell 21 can be cuboid in shape, and the cell assembly 20 can comprise two cells 21. The two cells 21 are stacked along the width direction (Y direction) and accommodated in the housing 30. The tab 22 comprises a positive tab 22A and a negative tab 22B, and each cell 21 is arranged a positive tab 22A and a negative tab 22B at two ends opposite to each other in the length direction (X direction).

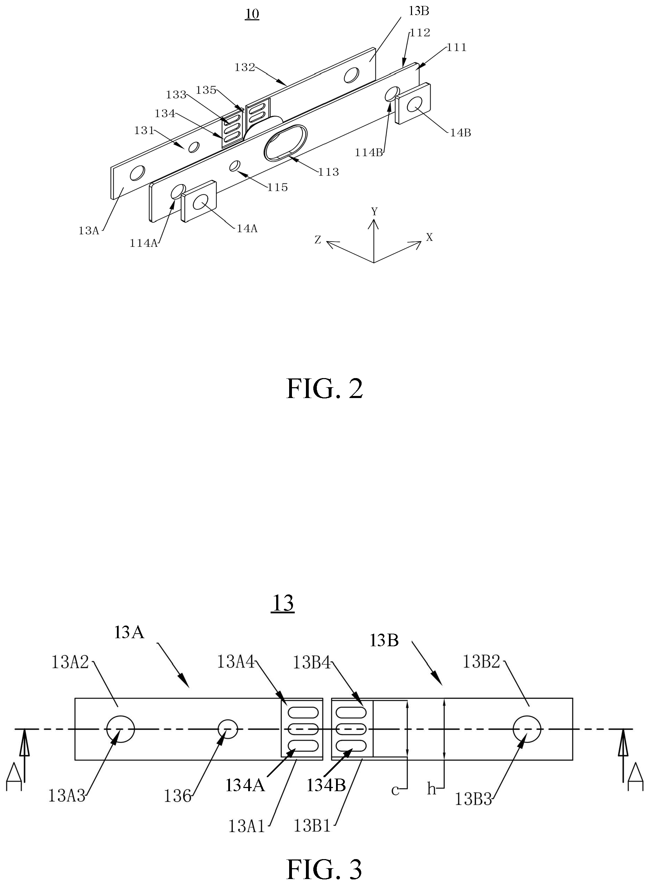

In some embodiments, as shown in FIG. 1 and FIG. 2, the end cover assembly 10 comprises a cover plate 11, an explosion-proof valve 12, an insulating plate group 13, and a pole 14.

The cover plate 11 can have a flat plate structure, and a length direction of the cover plate 11 is consistent with a length direction of the battery 100, a width direction of the cover plate 11 is consistent with a width direction of the battery 100, and a thickness direction of the cover plate 11 is consistent with a height direction of the battery 100. It should be noted that the length direction, the width direction, and the thickness direction referred to below are all with reference to the cover plate 11.

As shown in FIG. 2, the cover plate 11 comprises a first surface 111 and a second surface 112 facing away from each other in the thickness direction (Z direction) of the cover plate 11, the first surface 111 faces an outside of the end cover assembly 10, and the second surface 112 faces the cell assembly 20. The cover plate 11 is arranged an explosion-proof hole 113, a pole hole, and a first liquid injection hole 115 that penetrate through the first surface 111 and the second surface 112.

In an embodiment of the present disclosure, the explosion-proof hole 113 is located in a middle portion of the cover plate 11, and the explosion-proof hole 113 may be oval in shape. In a length direction (X direction) of the cover plate 11, the shortest distances from the two opposite ends of the cover plate 11 to the explosion-proof hole are the same.

As shown in FIG. 2, the cover plate 11 has two pole holes, a first pole hole 114A and a second pole hole 114B, respectively. The first pole hole 114A and the second pole hole 114B are respectively located at the two opposite ends of the cover plate 11. The liquid injection holes are all circular in shape. In some embodiments of the present disclosure, the first pole hole 114A can be a positive pole hole, and the second pole hole 114B can be a negative pole hole; alternatively, the first pole hole 114A can be a negative pole hole, and the second pole hole 114B can be a positive pole hole.

As shown in FIG. 2, the first liquid injection hole 115 can be a circular shape. In some embodiments of the present disclosure, the first liquid injection hole 115 can be located between the first pole hole 114A and the explosion-proof hole 113; alternatively, the first liquid injection hole 115 can be located between the second pole hole 114B and the explosion-proof hole 113. It can be understood that the first liquid injection hole 115 is located between the positive pole hole and the explosion-proof hole 113.

The explosion-proof valve 12 is connected to the cover plate 11 and blocks the explosion-proof hole 113. In some embodiments of the present disclosure, the explosion-proof valve 12 is connected to the second surface 112, and the connection manner of the explosion-proof valve 12 to the second surface 112 includes but is not limited to gluing, welding, or clamping, etc. The explosion-proof valve 12 can also be arranged in the explosion-proof hole 113, specifically, an outer periphery of the explosion-proof valve 12 is connected to an inner wall of the explosion-proof hole 113.

In some embodiments of the present disclosure, an indentation can be formed on the explosion-proof valve 12. The thickness of the explosion-proof valve 12 at the indentation can be smaller than the thickness of the explosion-proof valve 12 at a position without the indentation. The indentation can make the explosion-proof valve 12 easier to explode open, and the present disclosure does not make a specific limitation on the shape and size of the indentation.

As shown in FIGS. 1 to 6, the insulating plate group 13 has a gap, and at least part of an orthographic projection of the explosion-proof valve 12 on the insulating plate group 13 overlapping the gap. With the design, the explosion-proof valve can be arranged corresponding to the gap, thereby ensuring that the gas generated inside the battery can reach the explosion-proof valve through the gap, and shortening the time for the gas to reach the explosion-proof valve.

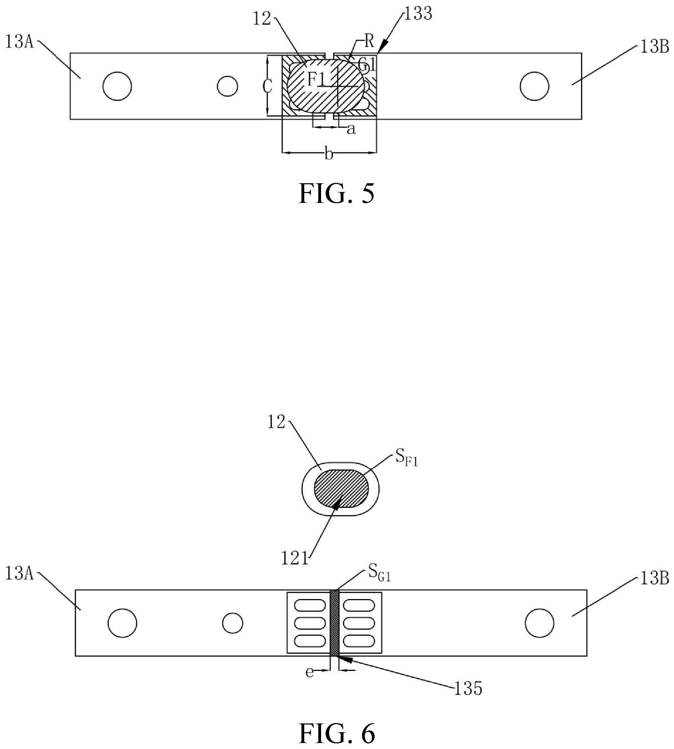

In addition, in some embodiments, the explosion-proof valve has an opening region, and the area S_{G1} of the gap and the area S_{F1} of the opening region satisfy the relationship expression: 0.03≤S_{G1}/S_{F1}≤0.15. Specifically, as shown in FIG. 6, the insulating plate group 13 comprises a first insulating plate 13A and a second insulating plate 13B, and the first insulating plate 13A and the second insulating plate 13B have a gap 135 there between. The explosion-proof valve 12 has an opening region 121 (in the shadow region of FIG. 6), and the area S_{G1} of the gap 135 and the area S_{F1} of the opening region 121 satisfy the relationship: 0.03≤S_{G1}/S_{F1}≤0.15.

Specifically, the explosion-proof valve 12 has an indentation (or a notch) in an oval shape, and the indentation (or the notch) is annular. The region inside the indentation (or the notch) is the opening region 121. The orthographic projection of the opening region 121 on the insulating plate group has the same shape as the explosion-proof valve 12, but the sizes are proportional, that is, the size of the opening region 121 is less than or equal to the size of the explosion-proof valve 12. For convenience of calculation, the opening region 121 can be defined as the orthographic projection area of the explosion-proof valve 12 on the insulating plate group or the orthographic projection area of the explosion-proof hole on the insulating plate group.

It should be noted that the area S_{G1} of the gap 135 is the area of the region defined by the width of the insulating plate group 13 and the width of the gap (i.e., the distance e of the interval between the first insulating plate 13A and the second insulating plate 13B).

Optionally, S_{G1}/S_{F1} can be, but is not limited to, 0.03, 0.05, 0.07, 0.09, 0.11, 0.13, or 0.15.

When S_{G1}/S_{F1} is less than the lower limit (i.e., 0.03) of the relationship, it indicates that the area of the gap 135 is too small, which can cause the gas flow at the gap 135 to be too small. When the internal pressure of the battery 100 increases, the flow rate of the gas flowing from the gap 135 to the space between the explosion-proof valve 12 and the insulating plate group 13 slows down, and the explosion-proof valve 12 cannot achieve the effect of rapid response. When S_{G1}/S_{F1} is greater than the limit (i.e., 0.15) of the relationship, it indicates that the area of the opening region 121 is too small, which can cause the explosion-proof valve 12 to also fail to achieve the effect of rapid pressure relief; alternatively, it indicates that the gap 135 is too large, which would result in the gap 135 being unable to effectively filter out debris.

The area of the opening area 121 of the explosion-proof valve 12 is greater than the area of the gap 135, so when the internal pressure of the battery 100 increases, the gas flow rate and flow at the gap 135 can rapidly burst open the explosion-proof valve 12, thereby achieving the effect of rapid response of the explosion-proof valve 12. In addition, with the area of the gap 135 within an appropriate range, so after the explosion-proof valve 12 bursts open, a relatively small amount of combustion residue will be ejected from the gap 135 and the explosion-proof hole 113, thereby reducing safety hazards.

In some embodiments, as shown in FIG. 2, the insulating plate group 13 comprises a third surface 131 and a fourth surface 132 facing away from each other in the thickness direction (Z direction) of the insulating plate group 13, and the third surface 131 is connected to the second surface 112. The insulating plate group 13 is arranged a accommodation groove 133, and the opening of the accommodation groove 133 is away from the fourth surface 132 of the insulating plate group 13. That is, the third surface 131 is arranged the accommodation groove 133, the orthographic projection of the explosion-proof valve 12 on the insulating plate group 13 is located in the accommodation groove 133, and the bottom wall of the accommodation groove 133 is arranged a ventilation hole 134 penetrating through the fourth surface 132. The ventilation hole can further ensure the exhaust effect of the explosion-proof valve.

Optionally, the insulating plate group 13 can have a flat plate structure, and the length and width of the insulating plate group 13 can be the same as or slightly smaller than the length and width of the cover plate 11. The insulating plate group 13 is located between the cell assembly 20 and the cover plate 11, and is used for isolating the cover plate 11 from the cell assembly 20. The material of the insulating plate group 13 can be an insulating material, for example, plastic or the like.

As shown in FIG. 2, the insulating plate group 13 comprises a first insulating plate 13A and a second insulating plate 13B arranged opposite to each other along the length direction (X direction) of the cover plate 11, and the first insulating plate 13A and the second insulating plate 13B are combined to form the accommodation groove 133. It can be understood that the first insulating plate 13A and the second insulating plate 13B can be two independent insulating plate members, so the width of the gap 135 between the first insulating plate 13A and the second insulating plate 13B is the spacing distance there between. The length of the first insulating plate 13A and the length of the second insulating plate 13B can be the same or different.

Specifically, the insulating plate group 13 in the present disclosure is arranged two insulating plates (the first insulating plate 13A and the second insulating plate 13B), and the advantage is that when welding the two ends of the insulating plate group 13, the two insulating plates can share the stress, so the two insulating plates are uniformly stressed and do not deform in the middle, and the exhaust inside the battery is not affected.

In some embodiments, the first insulating plate 13A can be a positive insulating plate, and the second insulating plate 13B can be a negative insulating plate. In other embodiments, the first insulating plate 13A can be a negative insulating plate, and the second insulating plate 13B can be a positive insulating plate. It can be understood that the positive insulating plate is used to connect the positive electrode of the battery cell assembly 20, and the negative insulating plate is used to connect the negative electrode of the battery cell assembly 20. The present disclosure does not make specific limitations on the first insulating plate 13A and the second insulating plate 13B.

In some embodiments, as shown in FIG. 6, the width (i.e., e) of the gap between the first insulating plate 13A and the second insulating plate 13B is in the range of 0.5mm to 3mm.

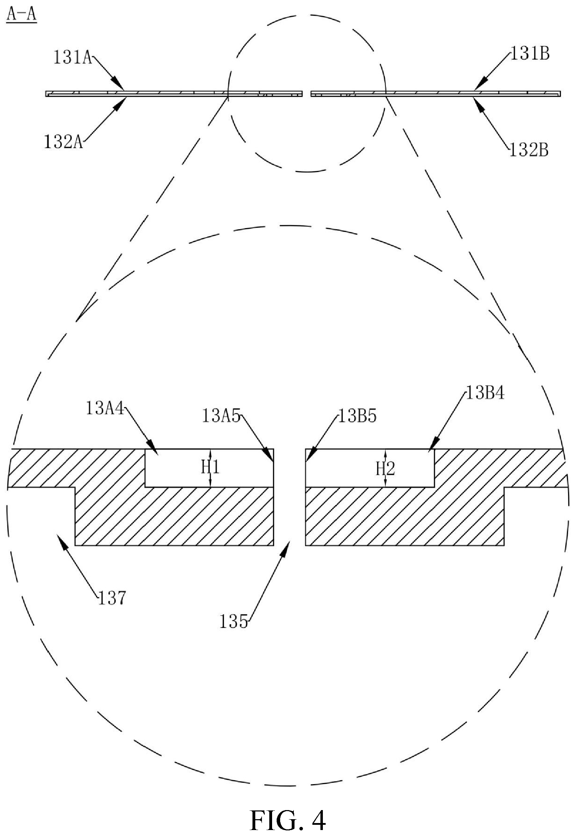

In some embodiments, the thicknesses of the first insulating plate 13A and the second insulating plate 13B are the same. As shown in FIG. 4, it can be understood that the first insulating plate 13A has a third left surface 131A and a fourth left surface 132A opposite to each other, and the second insulating plate 13B has a third right surface 131B and a fourth right surface 132B. The third left surface 131A and the third right surface 131B constitute a third surface 131, and the fourth left surface 132A and the fourth right surface 132B constitute a fourth surface 132.

In some embodiments, as shown in FIG. 5, the accommodation groove 133 and the explosion-proof valve 12 satisfy the relationship expression: 0.3≤F1/G1≤1, wherein F1 is the area of the orthographic projection of the explosion-proof valve 12 on the insulating plate group 13, and G1 is the area of the orthographic projection of the accommodation groove 133 on the cover plate 11.

Specifically, the second surface 112 is further arranged an explosion-proof groove, and the explosion-proof hole 113 penetrates through the bottom wall of the explosion-proof groove to the first surface 111, so the size of the explosion-proof groove should be larger than that of the explosion-proof hole 113. In some embodiments of the present disclosure, the explosion-proof groove has the same shape as the explosion-proof hole 113, and the sizes of the two are proportional. The explosion-proof valve 12 is accommodated in the explosion-proof groove, and the explosion-proof valve 12 is connected with the bottom wall and the peripheral wall of the explosion-proof groove. In this way, the explosion-proof valve 12 can block the explosion-proof hole 113.

In some embodiments of the present disclosure, the explosion-proof valve 12 is opposite to the accommodation groove 133, and the orthographic projection of the explosion-proof valve 12 on the insulating plate group 13 is located in the accommodation groove 133. Therefore, the area F1 of the orthographic projection of the explosion-proof valve 12 on the insulating plate group 13 is smaller than the area of the orthographic projection of the accommodation groove 133 on the cover plate 11. Optionally, F1/G1 can be, but is not limited to, 0.3, 0.4, 0.5, 0.6, 0.7, 0.8, 0.9, or 1.

The advantage of the combination of the explosion-proof valve 12 and the accommodation groove 133 with the sizes satisfying the range is that the size of the explosion-proof valve 12 (the explosion-proof hole 113) can be controlled within a proper range, so when the explosion-proof valve 12 bursts open to release pressure, the amount of combustion residue ejected outside the housing 30 of the battery 100 can be reduced; in addition, the explosion-proof valve 12 is smaller than the accommodation groove 133, so the explosion-proof valve 12 can be accommodated in the accommodation groove 133, thereby reducing the space occupied by the explosion-proof valve 12 in the thickness direction (Z direction) of the end cover assembly 10, and improving the utilization rate of the internal space of the battery 100.

In some embodiments, as shown in FIG. 5, the explosion-proof valve 12 has two opposite straight edges and two opposite arc edges, the two ends of the straight edges are connected to the two arc edges respectively, and the accommodation groove 133 has a square structure.

Further, the arc edges are semicircular, and in the thickness direction of the cover plate, the area F1 of the explosion-proof valve is F1 = πR²+2Ra, and the area G1 of the accommodation groove is G1 = bc, where R is the radius of the arc edge, a is the length of the straight edge, b is the length of the accommodation groove 133, and c is the width of the accommodation groove 133.

Specifically, the explosion-proof valve 12 can be oval-shaped, so it has two opposite straight edges and two opposite arc edges. Accordingly, the area of the explosion-proof valve 12 is calculated as the sum of the areas of two equal semicircles and a quadrilateral.

In other embodiments, the accommodation groove 133 can also be in the shape of a rounded rectangle, an ellipse, or an oval, and the present disclosure is not limited in this respect.

In some embodiments, as shown in FIG. 3, the accommodation groove 133 and the insulating plate group 13 satisfy the relationship expression: 0.4≤c/h≤0.8, where c is the width of the accommodation groove 133, and h is the width of the insulating plate group 13 in the width direction (Y direction) of the cover plate 11.

Specifically, in the width direction (Y direction) of the cover plate 11, the width of a first accommodation groove 13A4 and the width of a second accommodation groove 13B4 should be the same and smaller than the width of the insulating plate group 13.

In some embodiments of the present disclosure, the distances from the two opposite sides of the accommodation groove 133 in the Y direction to the nearest insulating plate group 13 corresponding to the two sides are the same. That is, the accommodation groove 133 is located in the middle of the insulating plate group 13 in the Y direction.

When c/h is less than the lower limit of the range, it means that the groove width of the accommodation groove 133 is small, which can cause the explosion-proof valve 12 to easily exceed the accommodation groove 133 and abut against the third surface 131, thereby increasing the thickness of the end cover assembly 10. When c/h is greater than the upper limit of the range, it means that the groove width of the accommodation groove 133 is large, which can cause the strength of the side wall of the accommodation groove 133 in the Y direction to be too weak.

Therefore, by designing the combination of the accommodation groove 133 and the insulating plate group 13 with the sizes satisfying the relationship, the groove width of the accommodation groove 133 can be within a proper range, which ensures that the explosion-proof valve 12 can be accommodated while ensuring the structural strength of the insulating plate group 13, thereby avoiding the end cover assembly 10 from being too thick.

In some embodiments, as shown in FIG. 3, the first insulating plate 13A further has a first opposite end 13A1 and a first connecting end 13A2, and the second insulating plate 13B further has a second opposite end 13B1 and a second connecting end 13B2. The first opposite end 13A1 and the first connecting end 13A2 are located at two opposite ends of the first insulating plate 13A in the length direction (X direction), and the second opposite end 13B1 and the second connecting end 13B2 are located at two opposite ends of the second insulating plate 13B in the length direction (X direction). The first opposite end 13A1 is close to the second opposite end 13B1. The first opposite end 13A1 and the second opposite end 13B1 jointly enclose the accommodation groove 133.

Further, as shown in FIG. 3, the end of the first insulating plate 13A away from the second insulating plate 13B (the first connecting end 13A2) is further arranged a third pole hole 13A3, and the end of the second insulating plate 13B away from the first insulating plate 13A

(the second connecting end 13B2) is further arranged a fourth pole hole 13B3 penetrating through. The first insulating plate 13A or the second insulating plate 13B is further arranged a second liquid injection hole 136. The third pole hole 13A3 is opposite to the first pole hole 114A, the fourth pole hole 13B3 is opposite to the second pole hole 114B, and the second liquid injection hole 136 is opposite to the first liquid injection hole 115.

As shown in FIG. 2, the pole 14 includes a first pole 14A and a second pole 14B, and the structure of the first pole 14A is basically the same as that of the second pole 14B. The pole 14 penetrates through the cover plate 11 and the insulating plate group 13. Specifically, the first pole 14A penetrates through the cover plate 11 and the first insulating plate 13A, and the second pole 14B penetrates through the cover plate 11 and the second insulating plate 13B.

In some embodiments, the first pole 14A can be a positive pole 14, and the second pole 14B can be a negative pole 14. In other embodiments, the first pole 14A can be a negative pole 14, and the second pole 14B can be a positive pole 14.

It can be understood that the first pole 14A should penetrate through the first pole hole 114A and the third pole hole 13A3, and the second pole 14B should penetrate through the second pole hole 114B and the fourth pole hole 13B3.

In some embodiments, as shown in FIG. 3 and FIG. 4, the first insulating plate 13A is arranged the first accommodation groove 13A4 concaved on a side facing the cover plate 11, and second insulating plate 13B is arranged the second accommodation groove 13B4 concaved on a side facing the cover plate 11, and the first accommodation groove 13A4 and the second accommodation groove 13B4 constitute the accommodation groove.

Specifically, on the basis of the embodiments, the accommodation groove 133 can comprise the first accommodation groove 13A4 and the second accommodation groove 13B4. The first accommodation groove 13A4 is located on the first opposite end 13A1, the second accommodation groove 13B4 is located on the second opposite end 13B1, and the gap 135 is located between the first accommodation groove 13A4 and the second accommodation groove 13B4.

Further, the first accommodation groove 13A4 extends to a side of the first insulating plate 13A facing the second insulating plate 13B to form a first notch 13A5 in the length direction (X direction) of the cover plate 11; and the second accommodating groove 13B4 extends to a side of the second insulating plate 13B facing the first insulating plate 13A to form a second notch 13B5 in the length direction (X direction) of the cover plate 11.

The third left surface 131A is arranged a concaved first accommodation groove 13A4, and the first accommodation groove 13A4 extends to the side of the first insulating plate 13A facing the second insulating plate 13B to form a first notch 13A5 along the X direction; and the third right surface 131B is arranged a concaved second accommodation groove 13B4, and the second accommodation groove 13B4 extends to the side of the second insulating plate 13B facing the first insulating plate 13A to form a second notch 13B5 along the X direction. Therefore, the bottom wall of the first accommodation groove 13A4 and the bottom wall of the second accommodation groove 13B4 are not shielded.

By setting the first accommodation groove 13A4 to extend to the side of the first insulating plate 13A to form the first notch 13A5 and setting the second accommodation groove 13B4 to extend to the side of the second insulating plate 13B to form the second notch 13B5, the bottom wall of the first accommodation groove 13A4 and the bottom wall of the second accommodation groove 13B4 are not shielded, and when the explosion-proof valve 12 is accommodated in the accommodation groove 133, the explosion-proof valve 12 and the bottom wall of the accommodation groove 133 can retain a spacing space, thereby forming a certain pressure relief space. When the gas in the battery 100 is pressurized, the pressure relief space can provide a greater gas pressure and then cause the explosion-proof valve 12 to burst open.

In some embodiments, as shown in FIG. 4, a groove depth H1 of the first accommodation groove 13A4 is in a range of 0.5mm to 2mm; and/or a groove depth H2 of the second accommodation groove 13B4 is in a range of 0.5mm to 2mm.

Specifically, the groove depth is the depth of the accommodation groove in the Z direction. The depth of the first accommodation groove 13A4 and the depth of the second accommodation groove 13B4 can be the same or different. Exemplarily, the accommodation groove 133 has a uniform depth. Moreover, the depth of the accommodation groove 133 should be less than the thickness of the insulating plate group 13.

Optionally, the depth of the first accommodation groove 13A4 and/or the depth of the second accommodation groove 13B4 can be, but is not limited to, 0.5mm, 0.7mm, 1mm, 1.2mm, 1.4mm, 1.6mm, 1.8mm, or 2mm. When the depth of the first accommodation groove 13A4 and/or the depth of the second accommodation groove 13B4 is less than the lower limit of the range, the accommodation groove 133 is too shallow, the explosion-proof valve 12 can protrude from the second surface 112, the accommodation groove 133 cannot completely accommodate the explosion-proof valve 12, and the thickness of the end cover assembly 10 is increased. When the depth of the first accommodation groove 13A4 and/or the depth of the second accommodation groove 13B4 is greater than the upper limit of the range, the bottom wall of the accommodation groove 133 is too thin, the strength is weak, and the accommodation groove 133 is prone to damage during installation of the end cover assembly.

By setting the groove depths of the first accommodation groove 13A4 and the second accommodation groove 13B4 within the range, on the one hand, when the explosion-proof valve 12 protrudes from the second surface 112, a space for accommodating the explosion-proof valve 12 can be provided; on the other hand, it can also ensure that the first insulating plate 13A and the second insulating plate 13B have sufficient thickness, thereby ensuring the structural strength of both, and preventing bending or even breaking during the assembly of the battery 100.

Further, the depth of the accommodation groove 133 is set within the range, which can also form a gap between the bottom wall of the accommodation groove 133 and the explosion-proof valve 12, thereby preventing the explosion-proof valve 12 from being opened prematurely when the internal pressure of the battery 100 does not reach the explosion threshold.

In some embodiments, a ventilation hole 134 is arranged on both the first insulating plate 13A and the second insulating plate 13B.

In some embodiments, as shown in FIG. 3, the number of ventilation holes 134 is plurality, and the ventilation holes 134 comprise first ventilation holes 134A and second ventilation holes 134B, the first ventilation holes 134A are arranged on the first insulating plate 13A, the second ventilation holes 134B are arranged on the second insulating plate 13B, and the number of the first ventilation holes 134A is the same as that of the second ventilation holes 134B.

Further, the plurality of the ventilation holes 134 on the first insulating plate and/or the second insulating plate are arranged in an array.

Specifically, the first ventilation holes 134A and the second ventilation holes 134B can have the same or different shapes and sizes. It can be understood that when the first insulating plate 13A and the second insulating plate 13B have the same length, the first ventilation holes 134A and the second ventilation holes 134B can have the same shapes and sizes. When the first insulating plate 13A and the second insulating plate 13B have different lengths, the first ventilation holes 134A and the second ventilation holes 134B can have different shapes and sizes.

For example, the number of the first ventilation holes 134A can be three, and the number of the second ventilation holes 134B can also be three. The three first ventilation holes 134A are arranged in the Y direction at intervals, and the three second ventilation holes 134B are arranged in the Y direction at intervals.

Optionally, the contour shape of the first ventilation holes 134A and the second ventilation holes 134B can be a rounded rectangle or an ellipse-like shape.

By arranging the plurality of the ventilation holes 134 on the insulating plate group 13, the plurality of the ventilation holes 134 and the gap 135 of the insulating plate group 13 can form a pressure relief channel, that is, when the internal pressure of the battery 100 increases, gas can be collected near the explosion-proof valve 12 through the ventilation holes 134 and the gap 135, thereby bursting open the explosion-proof valve 12; and the insulating plate group 13 with the plurality of the ventilation holes 134 also forms a filtering system, which can reduce the occurrence of combustion residue in the battery 100 being ejected outside the battery 100 after being blocked by the insulating plate group 13.

In some embodiments, the area of the orthographic projection of the explosion-proof valve 12 on the first insulating plate 13A accounts for 40% to 70% of the total projection area of the explosion-proof valve 12 in the accommodation region, and the explosion-proof hole 113 and the ventilation hole 134 are opposite.

Specifically, the explosion-proof valve 12 can be located in the central region of the cover plate 11. It should be noted that, since the cover plate 11 is rectangular, the explosion-proof valve 12 is located in the central region of the cover plate 11 because the explosion-proof valve 12 is the same distance from both ends of the long side of the cover plate 11 and the same distance from both ends of the short side of the cover plate 11.

In some embodiments, the explosion-proof valve 12 is an axisymmetric figure, so when the lengths of the first insulating plate 13A and the second insulating plate 13B are different, the areas of the first insulating plate 13A and the second insulating plate 13B covering the explosion-proof valve 12 are different. Therefore, the opposite end of one of the first insulating plate 13A and the second insulating plate 13B exceed the position of the central axis of the explosion-proof valve 12, and the opposite end of the other of the first insulating plate 13A and the second insulating plate 13B does not exceed the position of the central axis of the explosion-proof valve 12.

It can be understood that, when the length of the first insulating plate 13A is greater than the length of the second insulating plate 13B, the area of the explosion-proof valve 12 covered by the first insulating plate 13A is larger; and when the length of the first insulating plate 13A is smaller than the length of the second insulating plate 13B, the area of the explosion-proof valve 12 covered by the first insulating plate 13A is smaller.

In the combined state, when the battery 100 is internally depressurized, the two opposite ends (i.e., the opposite end exceeding the central position of the explosion-proof valve 12 and the opposite end not exceeding the central position of the explosion-proof valve 12) are simultaneously pressed by the internal air pressure, and the opposite end exceeding the central position of the explosion-proof valve 12 abuts against a larger area of the explosion-proof valve 12 to form an eccentric opposite end of the explosion-proof valve 12, so when the explosion-proof valve 12 is opened, the abutting end can help the explosion-proof valve 12 to be quickly opened, and when the explosion-proof valve 12 is in the opened state, the ventilation hole on the opposite end can also help to filter the internal combustion residues.

Optionally, the area of the orthographic projection of the explosion-proof valve 12 on the first insulating plate 13A accounts for 40%, 45%, 50%, 55%, 60%, 65%, or 70% of the total projection area of the explosion-proof valve 12 in the accommodation region. When the ratio of the orthographic projection area is less than the lower limit of the range, it indicates that the first insulating plate 13A is shorter and the second insulating plate 13B is longer, and the gap 135 there between cannot provide sufficient straight-through air pressure for the explosion-proof valve 12 to be opened. When the ratio of the orthographic projection area is greater than the upper limit of the range, it indicates that the second insulating plate 13B is shorter and the first insulating plate 13A is longer, and the gap 135 there between cannot provide sufficient straight-through air pressure for the explosion-proof valve 12 to be opened.

In some embodiments, the area of the orthographic projection of the explosion-proof valve 12 on the first insulating plate 13A accounts for 50% to 60% of the total projection area of the explosion-proof valve 12 in the accommodation region.

By setting the ratio of the orthographic projection area of the explosion-proof valve 12 on the first insulating plate 13A within the range, the explosion-proof valve 12 can be formed in an eccentric distribution manner on the first insulating plate 13A or the second insulating plate 13B, that is, the facing area of the explosion-proof valve 12 and the first insulating plate 13A or the second insulating plate 13B is large, so when the first insulating plate 13A and the second insulating plate 13B are pressed inside the battery 100, one of the insulation plates can have a larger abutting area with the explosion-proof valve 12, as a result, with a larger number of ventilation holes 134 present within the larger contact area, it is more conducive to the rapid opening of the explosion-proof valve 12.

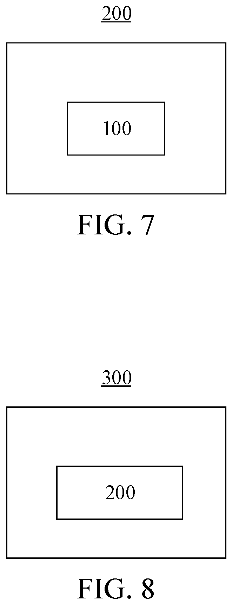

In some embodiments, the present disclosure also provides a battery pack. As shown in FIG. 7, the battery pack 200 comprises the battery 100 in the embodiments. Optionally, the battery pack 200 is a power battery or the like, and the present disclosure does not impose limitations.

In some embodiments, the present disclosure also provides an electric system. As shown in FIG. 8, the electric system 300 comprises the battery pack 200 in the embodiments. In some embodiments of the present disclosure, the electric system 300 comprises a load (not shown) connected with the battery pack 200, and the battery pack 200 is used for supplying power for the load. Optionally, the electric system can be a vehicle or an energy storage station, and the present disclosure does not impose limitations.

In the description of the embodiments of the present disclosure, it should be explained that the terms "center", "upper", "lower", "left", "right", "vertical", "horizontal", "inner", "outer" and the like indicate the positions or location relations based on the figures, and are only for the convenience of describing the present disclosure and simplifying the description, and do not indicate or imply that the devices or elements referred to must have a specific position, be constructed and operated in a specific position, and therefore cannot be understood as a limitation on the present disclosure.

The above disclosed is only an exemplary embodiment of the present disclosure, and of course cannot be used to limit the right scope of the present disclosure, and those skilled in the art can understand that all or part of the processes of the above embodiments can be implemented, and equivalent changes made according to the claims of the present disclosure still belong to the scope covered by the present disclosure.

## Claims

1. An end cover assembly (10), comprising:
a cover plate (11) comprising a first surface (111) and a second surface (112) facing away from each other in a thickness direction of the cover plate (11), and the cover plate (11) being arranged an explosion-proof hole (113) running through the first surface (111) and the second surface (112); an explosion-proof valve (12) being connected to the cover plate (11) and blocking the explosion-proof hole (113), and the explosion-proof hole (113) being arranged an opening region (121); and
an insulating plate group (13) comprising a third surface (131) and a fourth surface (132) facing away from each other in the thickness direction of the insulating plate group (13), the third surface (131) being connected to the second surface (112), the insulating plate group (13) being arranged a gap (135), at least part of an orthographic projection of the explosion-proof valve (12) on the insulating plate group (13) overlapping the gap (135), and an area S_{G1} of the gap (135) and an area S_{F1} of the opening region (121) satisfying a relationship expression: 0.03≤S_{G1}/S_{F1}≤0.15.

2. The end cover assembly (10) according to claim 1, wherein the insulating plate group (13) comprises a first insulating plate (13A) and a second insulating plate (13B) being disposed opposite to each other in a length direction of the cover plate (11), and the gap (135) being between the first insulating plate (13A) and the second insulating plate (13B).

3. The end cover assembly (10) according to claim 2, wherein a width of the gap (135) is in a range of 0.5mm to 3mm.

4. The end cover assembly (10) according to claim 1, wherein an accommodation groove (133) is arranged the insulating plate group (13), an opening of the accommodation groove (133) being away from the fourth surface (132) of the insulating plate group (13), and a projection of the explosion-proof valve (12) on the insulating plate group (13) being located in the accommodation groove (133).

5. The end cover assembly (10) according to claim 4, wherein the accommodation groove (133) and the explosion-proof valve (12) satisfy a relationship expression: 0.3≤F1/G1≤1, wherein F1 is an area of a projection of the explosion-proof valve (12) on the insulating plate group (13), and G1 is an area of a projection of the accommodation groove (133) on the cover plate (11).

6. The end cover assembly (10) according to claim 4, wherein the explosion-proof valve (12) has two opposite straight edges and two opposite arc edges, the two ends of the straight edges being connected to the two arc edges respectively, and the accommodation groove (133) has a square structure.

7. The end cover assembly (10) according to claim 4, wherein the accommodation groove (133) and the insulating plate group (13) satisfy a relationship expression: 0.4≤c/h≤0.8, wherein c is a width of the accommodation groove (133), and h is a width of the insulating plate group (13) in a width direction of the cover plate (11).

8. The end cover assembly (10) according to claim 4, wherein the insulating plate group (13) comprises the first insulating plate (13A) and the second insulating plate (13B) being arranged opposite to each other in the length direction of the cover plate (11), and the accommodation groove (133) comprises a first accommodation groove (13A4) and a second accommodation groove (13B4);
wherein the first accommodation groove (13A4) that is concaved being arranged on a side of the first insulating plate (13A) facing the cover plate (11), and the second accommodation groove (13B4) being arranged a side of the second insulating plate (13B) facing the cover plate (11).

9. The end cover assembly (10) according to claim 8, wherein the accommodation groove (133) satisfies at least one of the following:
a groove depth (H1) of the first accommodation groove (13A4) is in a range of 0.5mm to 2mm; or
a groove depth (H2) of the second accommodation groove (13B4) is in a range of 0.5mm to 2mm.

10. The end cover assembly (10) according to claim 8, wherein the first accommodation groove (13A4) extends to a side of the first insulating plate (13A) facing the second insulating plate (13B) to form a first notch (13A5) in the length direction of the cover plate (11), and the second accommodation groove (13B4) extends to a side of the second insulating plate (13B) facing the first insulating plate (13A) to form a second notch (13B5) in the length direction of the cover plate (11).

11. The end cover assembly (10) according to claim 8, wherein a bottom wall of the accommodation groove (133) is arranged a ventilation hole (134) penetrating to the fourth surface (132).

12. The end cover assembly (10) according to claim 11, wherein the bottom wall of the accommodation groove (133) is arranged a plurality of the ventilation holes (134), the plurality of the ventilation holes (134) comprising first ventilation holes (134A) and second ventilation holes (134B), the first ventilation holes (134A) being arranged on the first insulating plate (13A), and the second ventilation holes (134B) being arranged on the second insulating plate (13B).

13. The end cover assembly (10) according to claim 12, wherein the plurality of the ventilation holes satisfy at least one of the following:
the first ventilation holes (134A) on the first insulating plate (13A) being arranged in an array; or
the second ventilation holes (134B) on the second insulating plate (13B) being arranged in an array.

14. The end cover assembly (10) according to claim 11, wherein the explosion-proof hole (113) is opposite to the ventilation hole (134).

15. The end cover assembly (10) according to claim 1, wherein the cover plate (11) is further arranged a first pole hole (114A), a second pole hole (114B), and a first liquid injection hole (115), one of the first pole hole (114A) and the second pole hole (114B) is a positive pole hole, the other of the first pole hole (114A) and the second pole hole (114B) is a negative pole hole, and the first liquid injection hole (115) is located between the positive pole hole and the explosion-proof hole (113).

16. A battery (100), comprising a cell assembly (20), a housing (30), and the end cover assembly (10) according to any one of claims 1 to 15, the cell assembly (20) being accommodated in the housing (30), the end cover assembly (10) being connected with the housing (30), and the end cover assembly (10) being electrically connected with the cell assembly (20).

17. A battery pack (200), comprising the battery (100) according to claim 16.

18. An electric system (300), comprising the battery pack (200) according to claim 17.
